# EUROPEAN PATENT SPECIFICATION

(11) **EP 0 855 969 B1**
(45) Date of publication and mention of the grant of the patent: **07.06.2000**
(21) Application number: 96935041.2
(22) Date of filing: 17.10.1996
(51) Int. Cl.: B60N 3/00

(54) **TRAY APPARATUS**
TISCHPLATTE
ENSEMBLE PLATEAU

(30) Priority: 18.10.1995 GB 9521297
(43) Date of publication of application: 05.08.1998
(73) Proprietor: Kearns, Reford Thomas, Bishopston, Swansea SA3 3JW (GB)
(72) Inventor: Kearns, Reford Thomas, Bishopston, Swansea SA3 3JW (GB)
(74) Representative: Davies, Gregory Mark
(86) International application number: GB9602565
(87) International publication number: WO9714576

(56) References cited:
- FR-A- 2 623 379
- FR-A- 2 639 198
- GB-A- 2 113 540
- GB-A- 2 260 690
- GB-A- 2 272 371
- LU-A- 53 373

## Description

The present invention relates to tray apparatus, and in particular to tray apparatus suitable for use in a vehicle.

Tray apparatus suitable for use in a vehicle is known for example from GB-A-2 272 371. The tray apparatus disclosed has a support frame incorporating a saddle arranged to be hooked over a vehicle headrest to which frame a tray may be secured.

Tray apparatus suitable for use in vehicles is also disclosed in FR-A-2 623 379. The tray apparatus disclosed in FR-A-2 623 379 may be described as comprising:
(i) a tray element;
(ii) suspending means for suspending the tray element from a supporting structure, the suspending means comprising a pair of spaced downwardly depending struts arranged to be connected at respective lower regions to respective portions of the tray element;
(iii) a pivotal connection between the struts and the tray element such that the tray element is pivotable relative to the struts about a pivot axis to an operational position extending transversely to the struts.

According to the invention, such a tray apparatus is characterised in that:
(i) complementary securing formations are provided, associated with the tray element and struts respectively, arranged to be co-aligned when the tray element is oriented in the operational position; and that
(ii) biasing means is arranged to bias the complementary securing formations into engagement with one another to secure the tray element relative to the struts when the tray element is oriented in the operational position, the formations being disengageable from engagement with one another by means of displacement against the respective biasing means in the axial direction of the pivot axis.

When the co-aligned formations are biased into engagement with one another, pivotal movement of the tray element away from the operational position (in both pivotal directions) is substantially inhibited.

It is preferred that the suspending means comprises a saddle portion connected towards the upper ends of the struts, which saddle portion comprise an elongate element extending intermediate the upper ends of the struts and arranged in use to hook over a vehicle headrest such that the apparatus may be suspended therefrom.

Advantageously, the saddle portion of the suspending means is pivotally connected to the struts to be movable to a stowed position in which the elongate element extends between the struts in the region of their lower ends.

It is preferred that the tray element is pivotable relative to the struts to be secured in a plurality of differing operational orientations transversely to the struts.

Advantageously, the tray apparatus therefore comprises a tray element and suspending means for suspending the tray element from a supporting structure, the suspending means comprising a pair of spaced downwardly depending struts arranged to be connected at respective lower regions to respective portions of the tray element, the connection between the struts and tray element being such that the tray element is pivotable relative to the struts to be secured in a plurality of differing orientations extending transversely to the struts.

This enables the desired angular orientation of the tray element relative to the strut members to be selected for use with supporting structures of differing dimensions. Typically, as described above, the supporting structure comprises a vehicle headrest, the tray element extending outwardly from the rear of the vehicle seat provided with the headrest.

Advantageously, each strut, and/or the respective portions of the tray element carries a plurality of the securing formations arranged in an array about the pivotal axis of the tray element. In a preferred embodiment each strut and the respective portions of the tray element both carry respective arrays of complementary engaging securing formations arranged such that the formations carried by the struts and the formations carried by the portions of the tray element are engageable in a plurality of different relative pivotal orientations of the struts and tray element.

Preferably, the complementary securing formations comprise male and female formations such as projections and recesses (or lugs and bores).

Desirably, the biasing means comprises resilient biasing means such that, by the application of an external force to counter the biasing force, the engagement of the co-aligned complementary securing formations may be overcome, thereby permitting the tray element and struts to be relatively pivotally moved from the secured operational position.

It is possible that inherent resilience of the struts may comprise the resilient biasing means, however it is preferred that the resilient biasing means comprises a spring element arranged to normally bias the securing formations into securing engagement with one another when co-aligned.

Preferably, the struts are pivotable from the operational position to a stowed position in which the struts lie adjacent the general plane of the tray element. Advantageously, the struts are pivotable from the operational position to the stowed position through more than 180° (preferably through approximately 270° up to 330°) such that in the stowed position the struts lie adjacent the underside of the tray element.

The invention will now be further described in a specific embodiment, by way of example only, and with reference to the accompanying drawings, in which:
Figure 1 is a schematic perspective view of tray apparatus according to the invention;
Figure 2 is a part sectional side elevation of the apparatus of Figure 1;
Figure 2a is a view of a part of the apparatus of Figures 1 and 2;
Figure 3 is a schematic view of the apparatus of Figures 1 to 2a;
Figure 4 is a plan view of the tray element comprising the apparatus of Figures 1 to 3;
Figure 5 is a detail sectional view of a part of the tray apparatus of the preceding figures; and
Figures 6 and -7 are exemplary exploded views from differing perspectives of an alternative embodiment of apparatus parts corresponding to the parts shown in Figure 5.

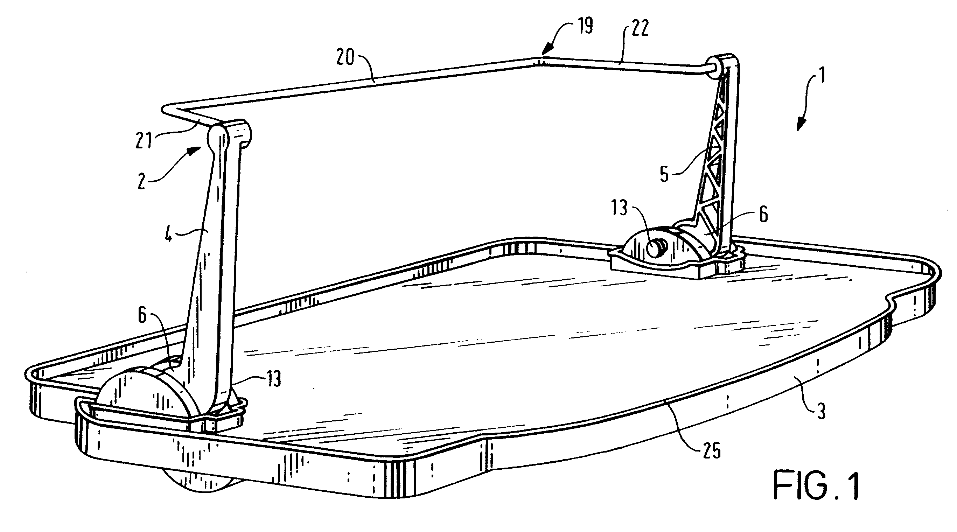

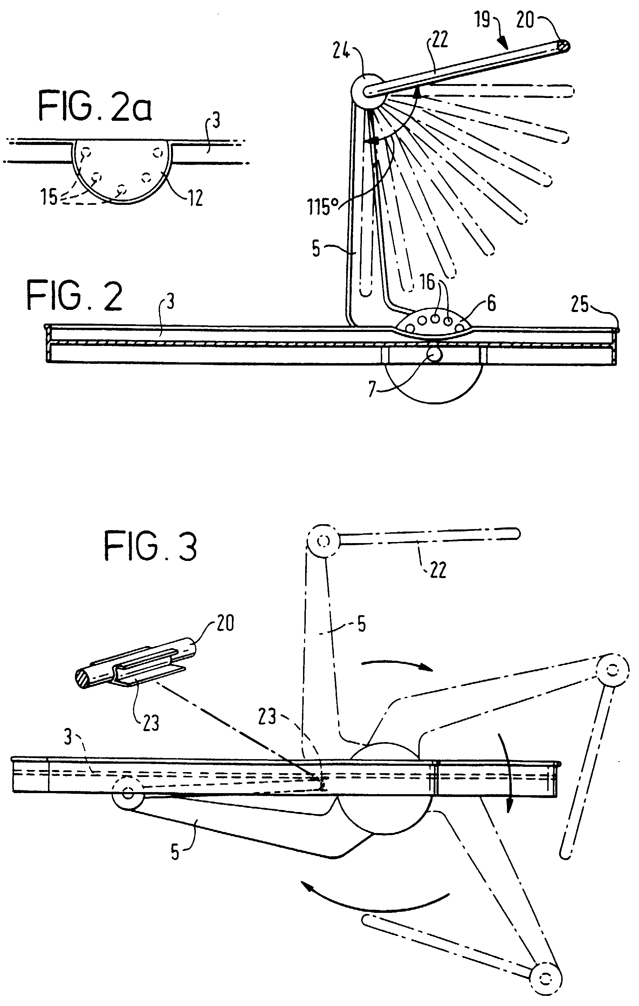

Referring to the drawings, tray apparatus 1 comprises suspending means 2 and a tray element 3 arranged to be oriented transversely to upright plastics struts 4,5 (comprising the suspending means) when in an operational position as shown in Figures 1 and 2 particularly.

Each strut 4,5 is provided with a lowermost boss 6 which is pivotally mounted within void formations 8 provided through tray element 3. A pivot pin 7 extends through respective bosses 6 and guide channels 9,10 provided in respective upstanding boss portions 11,12 of the tray element to permit relative pivotal movement of the tray element 3 and struts 4,5. Each pin 7 is provided with a projecting head 13 positioned above the surface of the tray element.

Boss portions 12 of the tray element are provided with a plurality of outwardly projecting pins or lugs 15 spaced angularly around the pivotal axis defined by pivot pin 7. A plurality of correspondingly spaced receiving recesses or bores 16 are provided about the pivotal axis of respective strut bosses 6, recesses or bores 16 being arranged to co-align with (and matingly receive) the array of pins or lugs 15 in predetermined operational positions (such as that shown in Figures 1 and 2).

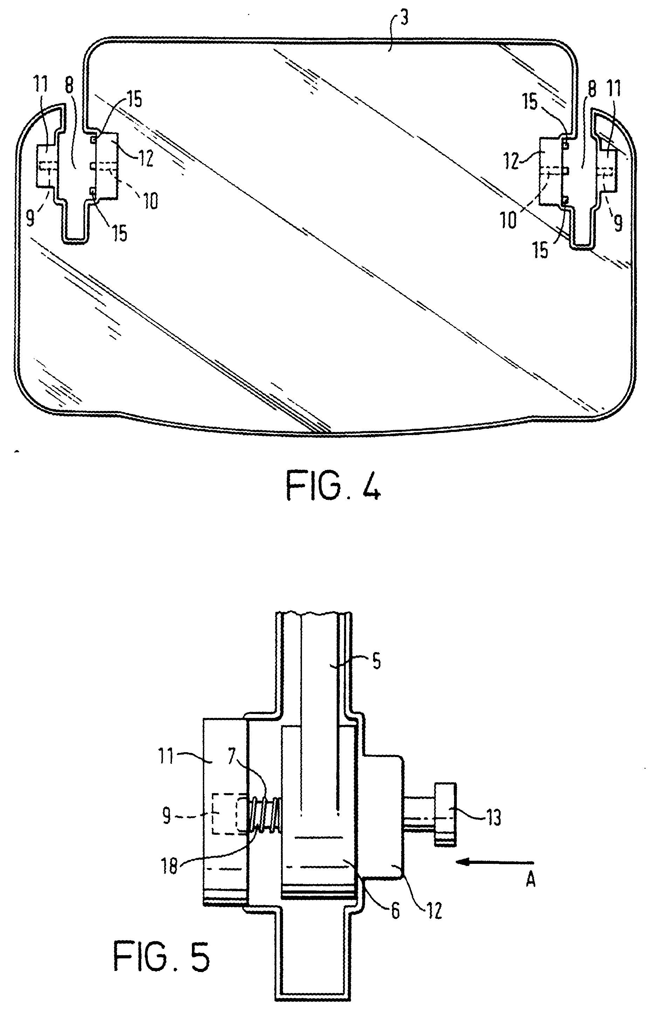

A helical biasing spring 18 is provided to normally bias the array of pins or lugs 15 into securing engagement with the array of recesses or bores 16 when co-aligned to secure the tray element 3 relative to the struts 4,5. (In certain less preferred embodiments the inherent resilience of the struts 4,5 may be sufficient to cause engagement of pins or lugs 15 with recesses or bores 16 when co-aligned). By urging heads 13 of pins 7 axially outwardly (in the direction of arrow A in Figure 5), bosses 6 move outwardly against springs 18 causing the array of pins or lugs 15 to become disengaged from the array of recesses or bores 16 thereby enabling tray element 3 and struts 4,5 to be pivoted to a stowed position, or an alternatively orientated operational position.

Suspending means 2 is provided with a saddle portion 19 pivotally connected to the uppermost portions of respective struts 4,5 to be pivoted between the operational position (as shown in Figures 1 and 2) and a stowed position (as shown in the final dashed detail in Figure 2). Saddle portion 19 comprises an elongate portion 20 extending the majority of the distance between struts 4,5 and perpendicularly extending terminal elements 21,22 connecting elongate portion 20 to the struts 4,5. In the operational position, terminal elements 21,22 abut shoulder portions 24 provided on struts 4,5 to ensure that the saddle is orientated at an angle of approximately 115° to the struts 4,5 (as shown in Figure 2).

In use, the saddle portion 19 of the suspending means is hooked over a vehicle headrest (not shown) such that struts 4,5 extend downwardly adjacent the vehicle seat back, tray element 3 being oriented and secured in the operational position as shown in Figures 1 and 2. Depending on the desired inclination, the tray element 3 may be pivoted and secured as desired relative to struts 4,5.

When the apparatus is not in use struts 4,5 and saddle 19 may be pivoted to the stowed position as shown in Figure 3 in which struts 4,5 and pivoted through approximately 270° to lie adjacent the underside of tray element 3. Elongate portion 20 of saddle 19 is, in the stowed position received in a resilient clip 23 provided on the underside of tray element 3.

Tray element 3 may be provided with recesses or other formations on its supporting face for the improved retention of cups, plates or other receptacles. Peripheral lip 25 is suitably dimensioned and shaped to permit "clip on" accessories to be retained.

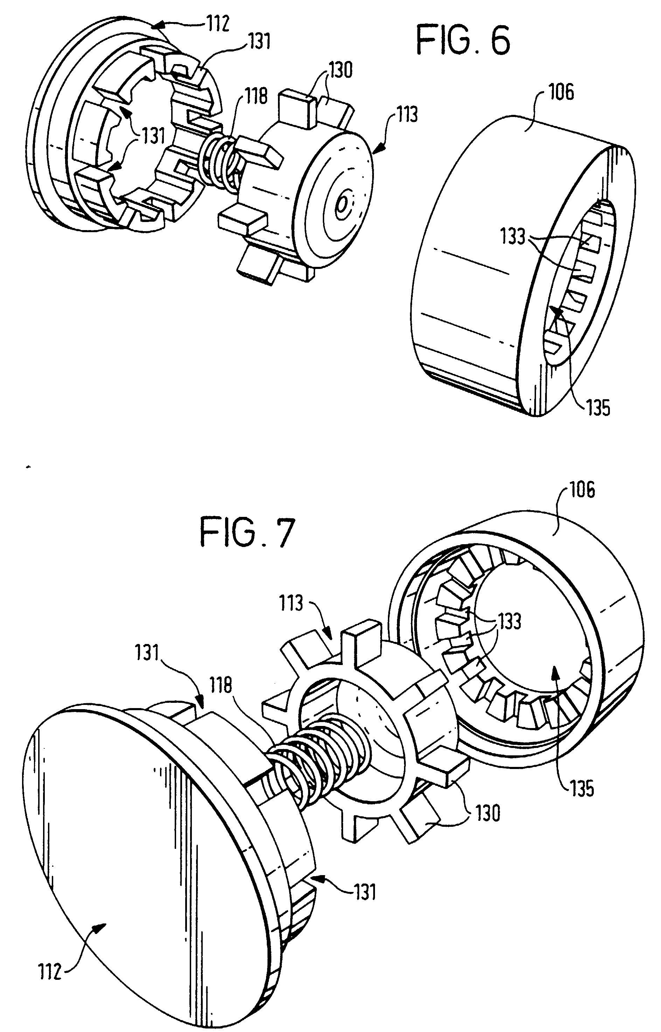

Referring to Figures 6 and 7, there is shown an alternative means of connection between the tray element 3 and the struts 5. The arrangement comprises respective bosses 112, 106 carried by the tray element and struts respectively and interposed therebetween a locking element 113 which is held captive within tray boss 112 when assembled. Locking element 113 is provided with a series of radially projecting fins 130 each of which is received within a respective guide recess 131 defined in tray boss 112 such that as the tray element (and therefore boss 112) pivots about its pivotal axis, locking element 113 is forced to rotate together with tray boss 112 about the same axis. Spring 118 normally biases locking element 113 to a locked position in which individual fins 130 engage simultaneously with respective guide recesses 131 and also with respective recess formations 133 defined in boss 106. In such a position locking element 113 locks the tray boss 112 relative to strut boss 106 and consequently locks the tray element 3 relative to the struts 5. This is the situation for example when the tray element extends transversely to the struts, being locked in the operational position.

In order to enable the tray element to be pivoted from the'operational position to the stowed position, locking element 113 is depressed against the biasing spring 118 from the locking position (in which the fins 130 engage recesses 133) to a "free" position in which fins 130 are retracted from recesses 133. Strut boss 112 is in this way effectively de-coupled from tray boss 106 permitting relative rotation therebetween. Aperture 135 in strut boss 112 permits access to enable locking element 113 to be depressed in order for fins 130 to disengage recesses 133 in boss 112.

## Claims

1. Tray apparatus (1) comprising
(i) a tray element (3);
(ii) suspending means (2) for suspending the tray element (3) from a supporting structure, the suspending means (2) comprising a pair of spaced downwardly depending struts (4, 5) arranged to be connected at respective lower regions to respective portions of the tray element (3);
(iii) a pivotal connection between the struts (4, 5) and the tray element (3) such that the tray element (3) is pivotable relative to the struts (4, 5) about a pivot axis to an operational position extending transversely to the struts (4, 5);
(iv) characterised in that complementary securing formations are provided (15, 16, 112, 106) associated with the tray element (3) and struts (4, 5) respectively, arranged to be co-aligned when the tray element (3) is oriented in the operational position; and that
(v) biasing means (18) is arranged to bias the complementary securing formations (15, 16, 112, 106) into engagement with one another to secure the tray element (3) relative to the struts (4, 5) when the tray element (3) is oriented in the operational position, the formations (15, 16, 112, 106) being disengageable from engagement with one another by means of displacement against the biasing means (18) in the axial direction of the pivot axis.

2. Tray apparatus according to claim 1, characterised in that in the operational position, the securing formations (15, 16, 112, 106) are biased into engagement with one another, such that pivotal movement of the tray element (3) away from the operational position in either pivotal direction is substantially inhibited.

3. Tray apparatus according to claim 1 or claim 2, characterised in that the suspending means (2) comprises a saddle portion (19) connected towards the upper ends of the struts (4, 5), which saddle portion (19) comprises an elongate element (20) extending intermediate the upper ends of the struts (4, 5) and arranged in use to hook over a vehicle headrest such that the apparatus may be suspended therefrom; the saddle portion (19) of the suspending means (2) preferably being pivotally connected to the struts (4, 5) to be moveable to a stowed position in which the elongate element (20) extends between the struts (4, 5) intermediate the upper and lower ends of the struts (4, 5).

4. Tray apparatus according to any preceding claim, characterised in that the tray element (3) is pivotably mounted to the struts (4, 5) so as to be secured in a plurality of differing operational orientations extending transversely to the struts (4, 5); each strut (4, 5), and/or the respective portions of the tray element preferably carrying a plurality of securing formations (15, 16, 112, 106) arranged in an array surrounding the pivotal axis of the tray element.

5. Tray apparatus according to claim 4, characterised in that each strut (4, 5) and the respective portions of the tray element (3) both carry respective arrays of complementary engaging securing formations (15, 16, 112, 106) arranged such that the formations carried by the struts (4, 5) and the formations carried by the portions of the tray element (3) are engageable in a plurality of different relative pivotal orientations of the struts (4, 5) and tray element (3).

6. Tray apparatus according to any preceding claim, characterised in that the complementary securing formations (15, 16) comprise engageable male (15) and female formations (16); and/or wherein respective locking members carry securing formations, the locking members being held captive relative to one of the tray element (3) or respective struts (4, 5) and in a locking position, being biased into engagement with complementary securing formations (15, 16) carried by the other of the tray element (3) or respective struts (4, 5).

7. Tray apparatus according to claim 6, characterised in that the locking members are movable against the biasing means to disengage the securing formations (15, 16) thereby permitting pivotal movement of the tray element (3) relative to the struts (4, 5).

8. Tray apparatus according to any preceding claim, characterised in that the biasing means (18) comprises resilient biassing means such that, by the application of an external force, the engagement of the co-aligned complementary securing formations may be overcome, thereby permitting the tray element and struts to be relatively pivotally moved from the secured operational position.

9. Tray apparatus according to claim 8, characterised in that the resilient biasing means (18) comprises a spring element arranged to normally bias the securing formations (15, 16, 112, 106) into securing engagement with one another when co-aligned.

10. Tray apparatus according to any preceding claim, characterised in that the struts are pivotable from the operational position to a stowed position in which the struts (4, 5) lie adjacent the general plane of the tray element (3); the struts (4, 5) preferably being pivotable from the operational position to the stowed position through more than 180° such that in the stowed position the struts (4, 5) lie adjacent the underside of the tray element (3) .

## Patentansprüche

1. Tischplatte (1), enthaltend:
(i) ein Tischelement (3);
(ii) Aufhängungsmittel (2) zum Aufhängen des Tischelements (3) von einer Haltestruktur, wobei die Aufhängungsmittel (2) ein Paar beabstandeter, nach unten verlaufender Streben (4, 5) umfassen, die so ausgestaltet sind, daß sie an entsprechenden unteren Regionen mit entsprechenden Bereichen des Tischelements (3) verbunden sind;
(iii) eine Schwenkverbindung zwischen den Streben (4, 5) und dem Tischelement (3), derart, daß das Tischelement (3) relativ zu den Streben (4, 5) um eine Schwenkachse herum in eine Betriebsposition schwenkbar ist, die quer zu den Streben (4, 5) verläuft;
(iv) dadurch gekennzeichnet, daß dem Tischelement (3) bzw. den Streben (4, 5) zugeordnete komplementäre Befestigungsanordnungen vorgesehen sind (15, 16, 112, 106), die so ausgestaltet sind, daß sie aneinander ausgerichtet sind, wenn das Tischelement (3) in der Betriebsposition orientiert ist; und daß
(v) ein Vorspannungsmittel (18) so vorgesehen ist, daß es die komplementären Befestigungsanordnungen (15, 16, 112, 106) in gegenseitigen Eingriff vorspannt, um das Tischelement (3) relativ zu den Streben (4, 5) festzuhalten, wenn das Tischelement (3) in der Betriebsposition orientiert ist, wobei die Anordnungen (15, 16, 112, 106) mittels Verschieben gegen das Vorspannungsmittel (18) in axialer Richtung der Schwenkachse aus ihrem gegenseitigen Eingriff herausgebracht werden können.

2. Tischplatte nach Anspruch 1, dadurch gekennzeichnet, daß in der Betriebsposition die Befestigungsanordnungen (15, 16, 112, 106) derart in gegenseitigen Eingriff vorgespannt sind, daß eine Schwenkbewegung der Tischplatte (3) weg von der Betriebsposition in beide Schwenkrichtungen wesentlich gehemmt ist.

3. Tischplatte nach Anspruch 1 oder Anspruch 2, dadurch gekennzeichnet, daß das Aufhängungsmittel (2) einen gegen die oberen Enden der Streben (4, 5) verbundenen Sattelabschnitt (19) umfaßt, welcher Sattelabschnitt (19) ein zwischen den oberen Enden der Streben (4, 5) verlaufendes längliches Element (20) umfaßt, das so ausgestaltet ist, daß es im Gebrauch über eine Nackenstütze eines Fahrzeugs hängbar ist, so daß die Vorrichtung an dieser aufgehängt werden kann; wobei der Sattelabschnitt (19) der Aufhängungsmittel vorzugsweise schwenkbar mit den Streben (4, 5) verbunden ist, so daß er in eine Stauposition bewegt werden kann, in welcher das längliche Element (20) zwischen den Streben (4, 5) zwischen den oberen und unteren Enden der Streben (4, 5) verläuft.

4. Tischplatte nach einem der vorstehenden Ansprüche, dadurch gekennzeichnet, daß die Tischplatte (3) schwenkbar an den Streben (4, 5) befestigt ist, so daß sie in einer Mehrzahl unterschiedlicher Betriebsorientierungen festgehalten werden kann, die quer zu den Streben (4, 5) verlaufen; wobei alle Streben (4, 5) und/oder die betreffenden Abschnitte der Tischplatte vorzugsweise eine Mehrzahl von Befestigungsanordnungen (15, 16, 112, 106) tragen, die in einer die Schwenkachse der Tischplatte umgebenden Gruppierung angeordnet sind.

5. Tischplatte nach Anspruch 4, dadurch gekennzeichnet, daß alle Streben (4, 5) und die betreffenden Abschnitte der Tischplatte (3) beide entsprechende Gruppierungen komplementärer, in Eingriff kommender Befestigungsanordnungen (15, 16, 112, 106) tragen, die so angeordnet sind, daß die von den Streben (4, 5) getragenen Anordnungen und die von den Abschnitten der Tischplatte (3) getragenen Anordnungen in einer Mehrzahl verschiedener relativer Schwenkorientierungen der Streben (4, 5) und der Tischplatte (3) in Eingriff gebracht werden können.

6. Tischplatte nach einem der vorstehenden Ansprüche, dadurch gekennzeichnet, daß die komplementären Befestigungsanordnungen (15, 16) in Eingriff bringbare männliche (15) und weibliche Anordnungen (16) umfassen; und/oder wobei betreffende Verschlußteile Befestigungsanordnungen tragen, wobei die Verschlußteile relativ zu entweder der Tischplatte (3) oder betreffenden Streben (4, 5) und in einer Verschlußposition festgehalten werden und durch Vorspannung in Eingriff gehalten werden mit von dem jeweils anderen, der Tischplatte (3) oder betreffenden Streben (4, 5) getragenen komplementären Befestigungsanordnungen (15, 16) durch Vorspannung in Eingriff gehalten werden.

7. Tischplatte nach Anspruch 6, dadurch gekennzeichnet, daß die Verschlußteile gegen die Vorspannungsmittel bewegbar sind, um die Befestigungsanordnungen (15, 16) außer Eingriff zu bringen, wodurch eine Schwenkbewegung der Tischplatte (3) relativ zu den Streben (4, 5) ermöglicht wird.

8. Tischplatte nach einem der vorstehenden Ansprüche, dadurch gekennzeichnet, daß die vorspannungsmittel (18) nachgiebige Vorspannungsmittel umfassen, derart, daß durch Anwendung einer äußeren Kraft der Eingriff der aneinander ausgerichteten komplementären Befestigungsanordnungen überwunden werden kann, wodurch eine relative Schwenkbewegung der Tischplatte und der Streben von der festgehaltenen Betriebsposition ermöglicht wird.

9. Tischplatte nach Anspruch 8, dadurch gekennzeichnet, daß die nachgiebigen Vorspannungsmittel (18) ein Federelement umfassen, das so angeordnet ist, daß es normalerweise die Befestigungsanordnung (15, 16, 112, 106) im Zustand der gegenseitigen Ausrichtung in einen festhaltenden Eingriff vorspannt.

10. Tischplatte nach einem der vorstehenden Ansprüche, dadurch gekennzeichnet, daß die Streben von der Betriebsposition in eine Stauposition geschwenkt werden können, in welcher die Streben (4, 5) benachbart zur Grundebene der Tischplatte (3) liegen; wobei die Streben (4, 5) vorzugsweise von der Betriebsposition in die Stauposition über mehr als 180° schwenkbar sind, derart, daß die Streben (4, 5) in der Stauposition an der Unterseite der Tischplatte (3) liegen.

## Revendications

1. Ensemble plateau (1) comprenant :
(i) un élément formant plateau (3) ;
(ii) des moyens de suspension (2) pour suspendre l'élément formant plateau (3) sur une structure de support, les moyens de suspension (2) comprenant une paire de montants écartés pendant (4, 5) vers le bas agencés pour être raccordés, au niveau de leurs régions inférieures respectives, à des parties respectives de l'élément formant plateau (3) ,
(iii) un raccord pivotant entre les montants (4, 5) et l'élément formant plateau (3) de telle sorte que l'élément formant plateau (3) puisse pivoter par rapport aux montants (4, 5) autour d'un axe de pivotement pour arriver dans une position de fonctionnement s'étendant transversalement par rapport aux montants (4, 5) ;
(iv) caractérisé en ce que des structures de fixation complémentaires sont prévues (15, 16, 112, 106) associées à l'élément formant plateau (3) et aux montants (4, 5) respectivement, agencées pour être alignées les unes par rapport aux autres lorsque l'élément formant plateau (3) est orienté dans la position de fonctionnement ; et en ce que
(v) des moyens de sollicitation (18) sont agencés pour solliciter les structures de fixation complémentaires (15, 16, 112, 106) pour les mettre en prise les unes avec les autres afin de fixer l'élément formant plateau (3) par rapport aux montants (4, 5) lorsque l'élément formant plateau (3) est orienté dans la position de fonctionnement, les structures (15, 16, 112, 106) pouvant être désolidarisées les unes des autres en les déplaçant contre les moyens de sollicitation (18) dans la direction axiale de l'axe de pivotement.

2. Ensemble plateau selon la revendication 1, caractérisé en ce que, dans la position de fonctionnement, les structures de fixation (15, 16, 112, 106) sont sollicitées pour venir en prise les unes avec les autres, de telle sorte que le mouvement de pivotement de l'élément formant plateau (3) qui l'éloigne de la position de fonctionnement dans l'une ou l'autre direction de pivotement est sensiblement supprimé.

3. Ensemble plateau selon la revendication 1 ou la revendication 2, caractérisé en ce que les moyens de suspension (2) comprennent une partie en étrier (19) raccordée vers les extrémités supérieures des montants (4, 5), laquelle partie en étrier (19) comprend un élément allongé (20) s'étendant entre les extrémités supérieures des montants (4, 5) et agencée pour être utilisée de manière à s'accrocher sur un appuie-tête de véhicule de telle sorte que l'ensemble puisse être suspendu à partir de celui-ci ; la partie en étrier (19) des moyens de suspension (2) étant de préférence raccordés de manière pivotante aux montants (4, 5) de manière à pouvoir passer d'une position rangée dans laquelle l'élément allongé (20) s'étend entre les montants (4, 5) entre les extrémités supérieure et inférieure des montants (4, 5).

4. Ensemble plateau selon l'une quelconque des revendications précédentes, caractérisé en ce que l'élément formant plateau (3) est monté de manière pivotante sur les montants (4, 5) afin d'être fixé dans une pluralité d'orientations de fonctionnement différentes s'étendant transversalement aux montants (4, 5) ; chaque montant (4, 5), et/ou les parties respectives de l'élément formant plateau supportant de préférence une pluralité de structures de fixation (15, 16, 112, 106) agencées pour former un ensemble entourant l'axe de pivotement de l'élément formant plateau.

5. Ensemble plateau selon la revendication 4, caractérisé en ce que chaque montant (4, 5) et les parties respectives de l'élément formant plateau (3) supportent tous les deux des ensembles respectifs de structures de fixation (15, 16, 112, 106) venant en prise de manière complémentaire agencés de telle sorte que les structures supportées par les montants (4, 5) et les structures supportées par les parties de l'élément formant plateau (3) puissent venir en prise selon une pluralité d'orientations de pivotement relatives différentes des montants (4, 5) et de l'élément formant plateau (3).

6. Ensemble plateau selon l'une quelconque des revendications précédentes, caractérisé en ce que les structures de fixation complémentaires (15, 16) comprennent des structures mâles (15) et femelles (16) pouvant venir en prise, et/ou dans lequel les éléments de blocage respectifs supportent des structures de fixation, les éléments de blocage étant maintenus enfermés par rapport à une partie formée par l'élément formant plateau (3) ou les aux montants respectifs (4, 5) et dans une position de blocage, en étant sollicités pour venir en prise avec les structures de fixation complémentaires (15, 16) supportées par l'autre partie formée par l'élément formant plateau (3) ou les montants respectifs (4, 5).

7. Ensemble plateau selon la revendication 6, caractérisé en ce que les éléments de blocage sont mobiles de manière à aller contre les moyens de sollicitation afin de désolidariser les structures de fixation (15, 16), permettant ainsi le mouvement de pivotement de l'élément formant plateau (3) par rapport aux montants (4, 5).

8. Ensemble plateau selon l'une quelconque des revendications précédentes, caractérisé en ce que les moyens de sollicitation (18) comprennent des moyens de sollicitation élastiques de telle sorte que, par l'application d'une force extérieure, la mise en prise des structures de fixation alignées les unes par rapport aux autres et complémentaires puisse être surmontée, permettant ainsi à l'élément formant plateau et aux montants d'être déplacés de manière relative par pivotement depuis la position de fonctionnement fixe.

9. Ensemble plateau selon la revendication 8, caractérisé en ce que les moyens de sollicitation élastiques (18) comprennent un élément de ressort agencé pour solliciter normalement les structures de fixation (15, 16, 112, 106) pour qu'elles viennent en prise les unes avec les autres lorsqu'elles sont alignées les unes avec les autres.

10. Ensemble plateau selon l'une quelconque des revendications précédentes, caractérisé en ce que les montants peuvent pivoter de la position de fonctionnement à une position rangée dans laquelle les montants (4, 5) sont placés de manière adjacente au plan général de l'élément formant plateau (3) ; les montants (4, 5) pouvant être de préférence pivotés de la position de fonctionnement à la position rangée sur plus de 180°, de telle sorte que, dans la position rangée, les montants (4, 5) sont placés de manière adjacente au côté inférieur de l'élément formant plateau (3).
